# EUROPEAN PATENT APPLICATION

(11) **EP 4 697 122 A1**
(43) Date of publication of application: **18.02.2026**
(21) Application number: 24788154.3
(22) Date of filing: 11.04.2024
(51) Int. Cl.: G05D 1/648, G05D 105/15

(54) **CONTROL METHOD AND APPARATUS, STORAGE MEDIUM, AND ELECTRONIC DEVICE**

(30) Priority: 11.04.2023 CN 202310382487; 21.04.2023 CN 202310436670; 24.05.2023 CN 202310594619
(71) Applicant: Positec Power Tools (Suzhou) Co., Ltd., Suzhou, Jiangsu 215123 (CN)
(72) Inventor: ZHANG, Zhaolong, Suzhou, Jiangsu 215123 (CN); GAO, Don Zhendong, Suzhou, Jiangsu 215123 (CN); PENG, Xiaonan, Suzhou, Jiangsu 215123 (CN)
(74) Representative: Kilburn & Strode LLP
(86) International application number: PCT/CN2024/087269
(87) International publication number: WO 2024/213052

(57) **Abstract**

The present application provides a control method, an apparatus, a storage medium and an electronic device in the field of device automation control. The control method includes: obtaining type information of a recognizable non-grass object; determining at least one target type information in the type information of the recognizable non-grass object; obtaining a target image of a working area; determining a recognition result by performing recognition processing on the target image based on an image recognition model; determining customized driving information corresponding to each non-grass area type according to the target type information; determining a first area in at least one non-grass area according to the customized driving information corresponding to each non-grass area type; controlling an autonomous mobile device to drive and/or work in an area to be driven corresponding to a target area. Through a solution in the present application, the mowing efficiency of the autonomous mobile device in the working area can be improved.

## Description

### TECHNICAL FIELD

The present application relates to a field of device automation control technology, specifically to a control method, an apparatus, a storage medium and an electronic device.

### BACKGROUND

Currently, an autonomous mobile device available in a market has relatively low intelligence. Taking an intelligent lawn mower as an example, the intelligent lawn mower can only divide a working area based on grass and a non-grass area to determine an operation area and a non-operation area. The autonomous mobile device works in the operation area. And since each lawn is different and different users have different requirements for a lawn, the autonomous mobile device uses a same working method for different lawns.

### SUMMARY

In view of this, embodiments of the present application provide a control method, an apparatus, a storage medium, and an electronic device.

In a first aspect, some embodiments of the present application provide a control method, which is applied to an autonomous mobile system. The autonomous mobile system comprises an autonomous mobile device, and the autonomous mobile device is configured to drive and/or work in a working area. The control method comprises: obtaining type information of a recognizable non-grass object, wherein the recognizable non-grass object characterizes a non-grass object that the autonomous mobile device can recognize; determining at least one target type information in the type information of the recognizable non-grass object; obtaining a target image of the working area; determining a recognition result by performing recognition processing on the target image based on an image recognition model, wherein the recognition result comprises at least one non-grass area, and a non-grass area type of the non-grass area corresponds to a type of the recognizable non-grass object; determining customized driving information corresponding to each non-grass area type according to the target type information, wherein a type of the customized driving information comprises drivable information and non-drivable information; determining a first area in the at least one non-grass area according to the customized driving information corresponding to each non-grass area type; and controlling the autonomous mobile device to drive and/or work in an area to be driven corresponding to a target area, wherein the target area comprises the first area.

In some embodiments, determining the at least one target type information in the type information of the recognizable non-grass object comprises: determining at least one recommended type information in the type information of the recognizable non-grass object; displaying the at least one recommended type information; and in response to a selection instruction from a user for the at least one recommended type information, determining the target type information in the at least one recommended type information.

In some embodiments, determining the at least one target type information in the type information of the recognizable non-grass object comprises: determining at least one recommended type information in the type information of the recognizable non-grass object; and determining the target type information from the at least one recommended type information based on a preset selection rule of the autonomous mobile device.

In some embodiments, determining the at least one recommended type information in the type information of the recognizable non-grass object comprises: determining date information; and determining the at least one recommended type information in the type information of the recognizable non-grass object according to the date information and a preset seasonal recommendation rule.

In some embodiments, determining the at least one recommended type information in the type information of the recognizable non-grass object comprises: determining distribution state information corresponding to each type of the recognizable non-grass object, wherein the distribution state information characterizes a distribution state of the recognizable non-grass object in the working area; and determining the at least one recommended type information in the type information of the recognizable non-grass object according to the distribution state information.

In some embodiments, the distribution state information comprises a total area. Determining the distribution state information corresponding to each type of the recognizable non-grass object comprises: obtaining a first historical image; and determining the total area corresponding to each type of the recognizable non-grass object based on the first historical image.

In some embodiments, determining the at least one recommended type information in the type information of the recognizable non-grass object according to the distribution state information comprises: determining the at least one recommended type information in the type information of the recognizable non-grass object according to type information corresponding to the total area that meets a first preset condition.

In some embodiments, the first historical image comprises a historical image collected by the autonomous mobile device during a process of running a preset distance in the working area, or a historical image collected by the autonomous mobile device during a process of running a preset time in the working area, or a historical image collected by the autonomous mobile device during a process of running a preset number of times in the working area.

In some embodiments, determining the customized driving information corresponding to each non-grass area type according to the target type information comprises: determining a target area type matching the target type information in the non-grass area types according to the target type information; and determining the customized driving information corresponding to the target area type as drivable information.

In some embodiments, determining the target area type matching the target type information in the non-grass area types according to the target type information comprises: determining configuration information according to the target type information, wherein the configuration information is configured to characterize whether each of the non-grass area types matches the target type information; and determining the target area type in the non-grass area types based on the configuration information.

In some embodiments, the recognition result further comprises a dangerous area and a non-dangerous area, the non-dangerous area comprises at least one non-grass area, and the dangerous area characterizes an area into which the autonomous mobile device is prohibited from entering.

In some embodiments, the recognition result further comprises at least one grass area, a grass area type of the grass area corresponds to a recognizable grass type, and the recognizable grass type characterizes a type of a grass object that the autonomous mobile device can recognize. The control method further comprises: determining a second area in the at least one grass area; wherein the target area comprises the first area and the second area, and controlling the autonomous mobile device to drive and/or work in the area to be driven corresponding to the target area comprises: controlling the autonomous mobile device to drive and/or work in an area to be driven corresponding to the first area and the second area.

In some embodiments, the non-grass area type comprises at least one of a mud ground type, a stone slab type, and a fallen leaves type.

In some embodiments, the control method further comprises: obtaining an image of an area to be optimized; uploading the image of the area to be optimized to a server to enable the server to generate an update instruction based on the image of the area to be optimized; and performing an update in response to the update instruction.

In some embodiments, uploading the image of the area to be optimized to the server comprises: uploading the image of the area to be optimized and user need information to the server to enable the server to generate at least one customized recognition model and an update instruction based on the image of the area to be optimized and the user need information.

In some embodiments, performing the update in response to the update instruction comprises: obtaining a customized recognition model in response to the update instruction; and, before determining the recognition result by performing recognition processing on the target image based on the image recognition model, the control method further comprises: when the customized recognition model is obtained, determining the image recognition model from an initial recognition model of the autonomous mobile device and the customized recognition model based on a user selection instruction; or, when the customized recognition model is obtained, determining the customized recognition model as the image recognition model.

In some embodiments, the image of the area to be optimized comprises an image of the area to be optimized captured by the autonomous mobile device and/or an image of the area to be optimized captured by a user terminal device.

In some embodiments, obtaining the image of the area to be optimized comprises: when a second preset condition is met, generating a first warning information; and obtaining the image of the area to be optimized corresponding to the first warning information.

In some embodiments, the second preset condition comprises: within a time period of a preset duration, a number of obstacle collisions of the autonomous mobile device exceeds a preset number of times, or, the autonomous mobile device detects being stuck, or, the autonomous mobile device detects being entangled.

In some embodiments, controlling the autonomous mobile device to drive and/or work in the area to be driven corresponding to the target area comprises: determining geometric feature information of the first area; and controlling the autonomous mobile device to drive and/or work in the area to be driven corresponding to the target area based on the geometric feature information of the first area.

In some embodiments, the control method further comprises: when geometric feature information of a non-grass area in the target area meets a third preset condition, controlling the autonomous mobile device to perform obstacle avoidance.

In some embodiments, the control method further comprises: when the target type information is not determined, obtaining a working area image of the working area, and when geometric feature information of any non-grass area in the working area image meets a fourth preset condition, controlling the autonomous mobile device to perform obstacle avoidance, wherein the fourth preset condition is different from the third preset condition.

In some embodiments, the control method further comprises: when geometric feature information of the target area meets a fifth preset condition, controlling the autonomous mobile device to perform obstacle avoidance, wherein the fifth preset condition comprises that an area of a non-grass area in the target area is greater than a first area.

In some embodiments, the control method further comprises: when an area of any non-grass area in a non-target area is greater than a second area, controlling the autonomous mobile device to perform obstacle avoidance, wherein the first area is greater than the second area.

In some embodiments, the autonomous mobile system further comprises a control device, and the control device is configured to control the autonomous mobile device.

In some embodiments, after determining the recognition result by performing recognition processing on the target image based on the image recognition model, the method further comprises: determining a candidate area meeting a first condition in the at least one non-grass area; wherein determining the first area in the at least one non-grass area according to the customized driving information corresponding to each of the non-grass area types comprises: determining the first area in the candidate area according to the customized driving information corresponding to each of the non-grass area types.

In some embodiments, the first condition comprises that an area type is a safe area type or a non-dangerous area type.

In some embodiments, the first condition comprises that an area type is stone slab, soil or fallen leaves.

In some embodiments, determining the first area in the candidate area comprises: determining attribute information of the candidate area; determining the first area in the candidate area according to the attribute information of the candidate area; wherein the attribute information of the candidate area comprises one or more of the following information: an area type, an area, a shape, a side length, a position and a boundary probability, wherein the boundary probability characterizes a probability that the candidate area is a boundary of the working area.

In some embodiments, the recognition result comprises an obstacle area; wherein determining the first area in the candidate area comprises: determining distribution information of the obstacle area; determining the first area in the candidate area according to the distribution information of the obstacle area; wherein the distribution information of the obstacle area comprises one or more of the following information: a position, an area, a shape, a side length and a relative position between the obstacle area and the candidate area.

In some embodiments, determining the first area in the candidate area according to the distribution information of the obstacle area comprises: determining an area to be screened in the candidate area according to the distribution information of the obstacle area; determining attribute information of the area to be screened; determining the first area in the area to be screened according to the attribute information of the area to be screened; wherein the attribute information of the area to be screened comprises one or more of the following information: an area type, an area, a shape, a side length, a position and a boundary probability, wherein the boundary probability characterizes a probability that the candidate area is a boundary of the working area.

In some embodiments, determining the area to be screened in the candidate area according to the distribution information of the obstacle area comprises: determining a peripheral polygon area corresponding to the candidate area; determining an overlapping area between the obstacle area and the peripheral polygon area according to the distribution information of the obstacle area; determining an area of other regions in the peripheral polygon area, wherein the other regions are regions in the peripheral polygon area except the candidate area; determining a ratio between the overlapping area and the area of the other regions; and determining the candidate area as the area to be screened when the ratio is less than a first threshold.

In some embodiments, determining the first area in the area to be screened according to the attribute information of the area to be screened comprises: determining the area to be screened as the first area when an area type of the area to be screened is stone slab and an area of the area to be screened is less than a second threshold; or, determining the area to be screened as the first area when the area type of the area to be screened is stone slab and both a length and a width of the area to be screened are less than a distance threshold.

In some embodiments, determining the first area in the area to be screened according to the attribute information of the area to be screened comprises: determining the area to be screened as the first area when an area type of the area to be screened is fallen leaves and a ratio between an area of the area to be screened and an image area is less than a third threshold.

In some embodiments, determining the first area in the area to be screened according to the attribute information of the area to be screened comprises: determining the area to be screened as the first area when an area type of the area to be screened is soil and an area of the area to be screened is less than a fourth threshold; or, determining the area to be screened as the first area when the area type of the area to be screened is soil and a shape of the area to be screened is non-strip shaped.

In some embodiments, the method further comprises: determining a region in the candidate area other than the first area as a non-drivable area; and controlling the autonomous mobile device to avoid a spatial area corresponding to the non-drivable area.

Some embodiments of the present application provide a control method, applied to an autonomous mobile system, wherein the autonomous mobile system comprises an autonomous mobile device, the autonomous mobile device is configured to drive and/or work in a working area, and the control method comprises: obtaining target type information, wherein the target type information characterizes at least one type of a non-grass object that the autonomous mobile device can recognize; obtaining a target image of the working area; determining a first area corresponding to the target type information by performing recognition processing on the target image based on an image recognition model; determining a target area, wherein the target area comprises the first area; and controlling the autonomous mobile device to drive and/or work in an area to be driven corresponding to the target area.

In some embodiments, the first area comprises at least one of a stone slab area, a soil area, a fallen leaves area, and a fallen flowers area.

In some embodiments, controlling the autonomous mobile device to drive and/or work in the area to be driven corresponding to the target area comprises: determining geometric feature information of the target area; and controlling the autonomous mobile device to drive and/or work in the area to be driven corresponding to the target area based on the geometric feature information of the target area.

In some embodiments, the geometric feature information comprises one or more of a length, an area, a shape, and an area boundary angle.

In some embodiments, determining the geometric feature information of the target area comprises: determining geometric feature information of the first area; wherein controlling the autonomous mobile device to drive and/or work in the area to be driven corresponding to the target area based on the geometric feature information of the target area comprises: controlling the autonomous mobile device to drive and/or work in the area to be driven corresponding to the target area based on the geometric feature information of the first area.

Some embodiments of the present application provide a control apparatus, applied to an autonomous mobile system, wherein the autonomous mobile system comprises an autonomous mobile device, and the autonomous mobile device is configured to drive and/or work in a working area. The control apparatus comprises: a first obtaining module, configured to obtain type information of a recognizable non-grass object, wherein the recognizable non-grass object characterizes a non-grass object that the autonomous mobile device can recognize; a first determining module, configured to determine at least one target type information in the type information of the recognizable non-grass object; a second obtaining module, configured to obtain a target image of the working area; a second determining module, configured to determine a recognition result by performing recognition processing on the target image based on an image recognition model, wherein the recognition result comprises at least one non-grass area, and a non-grass area type of the non-grass area corresponds to a type of the recognizable non-grass object; a third determining module, configured to determine customized driving information corresponding to each non-grass area type according to the target type information, wherein the customized driving information comprises drivable information or non-drivable information; a fourth determining module, configured to determine a first area in at least one non-grass area according to the customized driving information corresponding to each non-grass area type; and a control module, configured to control the autonomous mobile device to drive and/or work in an area to be driven corresponding to a target area, wherein the target area comprises the first area.

Some embodiments of the present application provide a computer-readable storage medium, wherein a computer program is stored on the computer-readable storage medium, the computer program being configured to perform the method mentioned in the first aspect and the second aspect.

Some embodiments of the present application provide an electronic device, comprising: a processor; a memory configured to store processor-executable instructions; wherein the processor is configured to perform the method mentioned in the first aspect and the second aspect.

The control method provided by embodiments of the present application has the following beneficial effects.

The autonomous mobile device in the embodiments of the present application is capable of further subdividing non-grass to recognize type information of a plurality of non-grass objects, and determining type information of any non-grass object as target type information, which facilitates the autonomous mobile device to determine a non-grass area that is the same as the target type information as a drivable area according to the target type information, and to call an algorithm corresponding to the target type information to work in the drivable area, thereby improving a mowing efficiency and a completion degree of the autonomous mobile device in an entire working area.

### BRIEF DESCRIPTION OF THE DRAWINGS

By describing an embodiment of the present application in more detail in conjunction with the drawings, the above and other objectives, features and advantages of the present application will become more apparent. The drawings are used to provide a further understanding of the embodiments of the present application and constitute a part of the specification, which are used to explain the present application together with the embodiments and do not constitute a limitation to the present application. In the drawings, a same reference numeral typically represents a same component or a same step.
Figure 1 shows a flow diagram of a control method according to some embodiments of the present application.
Figure 2 shows a schematic diagram of a lawn mower moving in a working area according to some embodiments of the present application.
Figure 3 shows a schematic diagram of a recognition result corresponding to a target image according to some embodiments of the present application.
Figure 4 shows a flow diagram of determining at least one target type information according to some embodiments of the present application.
Figure 5 shows a flow diagram of determining at least one target type information according to other embodiments of the present application.
Figure 6 shows a flow diagram of a control method according to other embodiments of the present application.
Figure 7 shows a flow diagram of controlling an autonomous mobile device to drive and/or work according to some embodiments of the present application.
Figure 8 shows a flow diagram of a control method according to some embodiments of the present application.
Figure 9 shows a structural diagram of a control apparatus according to some embodiments of the present application.
Figure 10 shows a structural diagram of an electronic device according to some embodiments of the present application.
Figure 11 shows a structural diagram of an autonomous mobile device according to some embodiments of the present application.
Figure 12 shows a module diagram according to some embodiments of the present application.

### DETAILED DESCRIPTION

The following will clearly and completely describe the technical solutions in the embodiments of the present application in conjunction with the accompanying drawings. Obviously, the described embodiments are only a part of the embodiments of the present application, not all of the embodiments. Based on the embodiments in the present application, all other embodiments obtained by a person of ordinary skill in the art without making creative efforts fall within a protection scope of the present application. In addition, it should be particularly noted that different embodiments can be combined with each other.

To facilitate an understanding of the present application, a more comprehensive description of the present application will be given with reference to the relevant drawings. Preferred embodiments of the present application are given in the drawings. However, the present application can be implemented in many different forms and is not limited to the embodiments described herein. On the contrary, these embodiments are provided to make a disclosure of the present application more thorough and complete. The embodiments provided in this specification can be combined with each other.

In the present application, unless otherwise explicitly specified and limited, a term such as "install", "connect", "join", "fix" and other terms should be broadly understood. For example, the term can be a fixed connection, can also be a detachable connection, or be integrated; can be a mechanical connection, can also be an electrical connection; can be a direct connection, can also be an indirect connection through an intermediate medium, can be an internal communication between two elements or an interaction relationship between two elements, unless otherwise explicitly limited. For a person of ordinary skill in the art, a specific meaning of the above terms in the present application can be understood according to a specific situation.

A term "first" and "second" are only used for descriptive purposes and cannot be understood as indicating or implying a relative importance or implicitly indicating a number of technical features indicated. Thus, a feature limited by "first" and "second" may explicitly or implicitly include at least one of the feature. In a description of the present application, a meaning of "a plurality of" is at least two, for example two, three, etc., unless otherwise explicitly and specifically limited.

Unless otherwise defined, all technical and scientific terms used herein have a same meaning as commonly understood by a person skilled in a technical field to which the present application pertains. A term used in the specification of the present application is only for a purpose of describing a specific embodiment and is not intended to limit the present application. A term "and/or" used herein includes any and all combinations of one or more of associated listed items.

An autonomous mobile device can be an automatic lawn mower or an automatic vacuum cleaner or an automatic mopping machine or an automatic snow sweeper or an other intelligent device that can move automatically. The autonomous mobile device can automatically move and perform a corresponding work within a specified working area, and can also return to a docking station along a boundary corresponding to the working area for docking or charging.

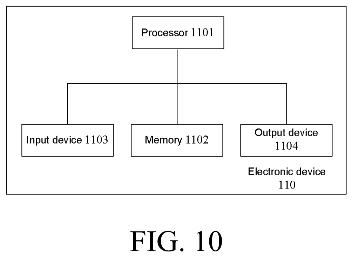

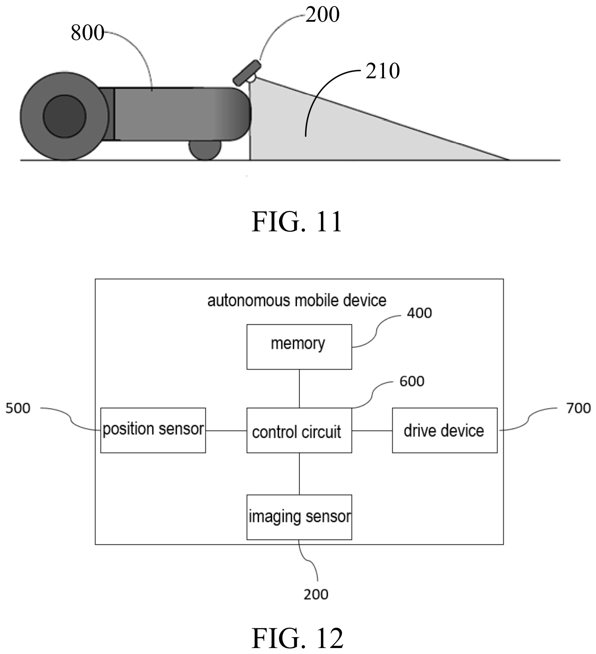

As shown in Figures 10 and 11, the autonomous mobile device includes a body 800, an imaging sensor 200, a position sensor 300 and a control circuit 600.

Specifically, the body 800 includes a drive device 700. The drive device 700 is configured to drive the body 800 to move on a working surface according to a received driving instruction, and typically includes a wheel and a motor that drives the wheel to rotate. The wheel may include a drive wheel and a driven wheel. The wheels can be distributed on both sides of the body 800, with one or two wheels on each side.

The body 800 also includes a working module. The working module is configured to execute a specific work task. For example, when the autonomous mobile device is an automatic lawn mower, the working module includes a cutting blade, a cutting motor, etc., and may also include an auxiliary component such as a cutting height adjustment mechanism to optimize or adjust a cutting effect. When the autonomous mobile device is an automatic vacuum cleaner, the working module includes a working component for performing a vacuum cleaning task such as a vacuum motor, a suction port, a vacuum tube, a vacuum chamber, and a dust collection device.

The body 800 may also include an energy module. The energy module is configured to provide energy for various operations of the autonomous mobile device. The energy module may include a rechargeable battery and a charging connection structure, wherein the charging connection structure is typically a charging electrode plate that can be used in conjunction with a charging electrode plate set up at the docking station to charge the autonomous mobile device.

The body 800 also includes a memory 400. The memory 400 is configured to store data generated by a sensor or a control circuit, or pre-store data for use by the control circuit.

The body 800 also includes a position sensor 500. The position sensor 500 may include an inertial measurement unit (IMU) or an odometer (ODO) installed on the drive device 700, and is configured to obtain a relative position based on a movement of the body 800.

In addition to the above modules, the body 800 may also include a housing for containing and mounting various modules, a control panel for user operation, and may also include various environmental sensors, such as a humidity sensor, a temperature sensor, an acceleration sensor, a light sensor, etc. The above sensors can assist the autonomous mobile device in judging a working environment to execute a corresponding program.

The control circuit 600 is a core component of the autonomous mobile device, and is configured to control an automatic movement and an operation of the autonomous mobile device. Functions executed by the control circuit 600 include controlling the working module to start or stop working, generating a movement path and controlling the drive device 700 to move according to the path, judging a power level of the energy module and timely controlling the autonomous mobile device to return to the docking station for automatic docking charging, and executing a corresponding program in combination with data of an environmental sensor.

Referring to Figures 11 and 12, the autonomous mobile device includes an imaging sensor 200 connected to the body 800, and is configured to capture an image in a forward direction of the body 800, where the image is at least partially an image of the working surface in the forward direction. A captured image is within a field of view 210 of the imaging sensor 200. The imaging sensor 200 can be a commonly used camera or LiDAR in the industry.

Generally, the imaging sensor 200 is installed at an upper front position of the body 800, is preferably centrally positioned, with a viewing angle directed downward to capture an image of the working surface. A size of a field of view 210 of the imaging sensor 200 can be adjusted according to an actual need - a larger the field of view 210, a more image captured in the forward direction of the body 800, and vice versa. The forward direction of the body 800 can have multiple variations, such as a normal forward movement, a reverse, a turning, etc. In this embodiment, the forward direction of the body refers to a normal forward direction, that is, a direction of a center axis of the body.

### Exemplary Method

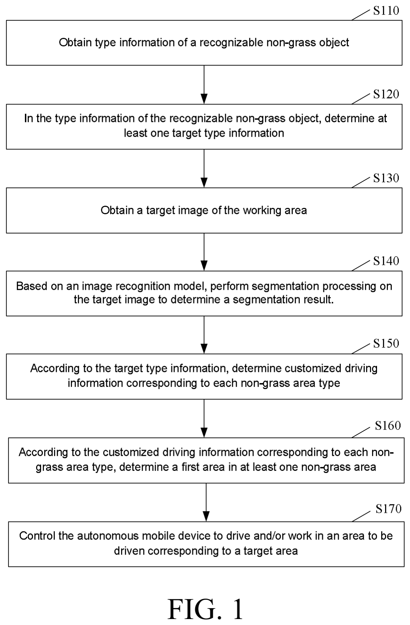

Figure 1 shows a flow diagram of a control method according to some embodiments of the present application. Exemplarily, the control method in an embodiment of the present application is applied to an autonomous mobile system. The autonomous mobile system includes an autonomous mobile device. The autonomous mobile device is configured to drive and/or work in a working area. As shown in Figure 1, the control method in some embodiments of the present application includes following steps.

Step S110, obtain type information of a recognizable non-grass object.

A recognizable non-grass object characterizes a non-grass object of which a type can be recognized by the autonomous mobile device. A non-grass object represents an object in an actual space, and type information corresponding to a number of non-grass objects can be same, or can be different.

Exemplarily, the autonomous mobile device is a lawn mower, an actual space is a garden area to be mowed, the garden area to be mowed includes a grass area, where a non-grass object includes a stone slab, a fallen leaf, a mud ground, etc. For example, for a non-grass object stone slab, type information of the non-grass object stone slab is stone slab; for a non-grass object fallen leaf, type information of the non-grass object fallen leaf is fallen leaves, for a non-grass object mud ground, type information of the non-grass object mud ground is mud ground. For example, a black strip-shaped stone path and a white circular stone path are of a stone path type, a suspended fence and a grounded fence are of a fence type.

Step S120, in the type information of the recognizable non-grass object, determine at least one target type information.

The target type information can be any one or more of the type information of the non-grass object. The target type information can be determined by a user, or can be determined by the autonomous mobile device, or can be preset by default when the autonomous mobile device leaves a factory (such as setting a stone path type as a default target type information).

Exemplarily, a non-grass object includes a stone slab, a fallen leaf, a mud ground, soil (for example, a place where a smaller number of grass grows). The stone slab can be determined as the target type information, or the mud ground can be determined as the target type information, or the mud ground and the fallen leaf can be simultaneously determined as the target type information, or all type information of the recognizable non-grass object are determined as the target type information.

Step S130, obtain a target image of the working area.

An image capture module can be configured on the autonomous mobile device to obtain the target image. Exemplarily, the image capture module is a camera. The target image can be captured in real-time during a movement of the autonomous mobile device.

Step S140, based on an image recognition model, perform recognition processing on the target image to determine a recognition result.

The recognition result includes at least one non-grass area. A non-grass area type of the non-grass area corresponds to the type of the recognizable non-grass object. Exemplarily, the non-grass area type includes at least one of a mud ground type, a stone slab type, a fallen leaves type. The non-grass area type in the present application is not limited to this.

The recognition result can also include an other area. The other area is an area other than a grass area and a non-grass area corresponding to a recognizable non-grass object (such as the mud ground type, the stone slab type, the fallen leaves type, etc.), for example, an obstacle area of which a specific type cannot be recognized, a boundary area, an area outside a boundary. Wherein, a mud ground refers to an area where a soil hardness is greater than or equal to a hardness threshold, or refers to an area where a soil water content is greater than or equal to a water content threshold.

The recognition result can also include a grass area.

A non-grass area at a different position in the recognition result can correspond to a same type, or can correspond to a different type. For example, a mud ground area is distributed on both sides of an image, and a stone slab area is distributed in a middle part of the image.

Exemplarily, semantic segmentation is performed on the target image using the image recognition model to classify each pixel point in the target image, and based on a classification result, use a different color to represent a grass area and at least one non-grass area in the target image, or use a different number to represent the grass area and the at least one non-grass area, or directly use a grass mark to mark the grass area, and use a non-grass area type to mark a respective corresponding non-grass area.

Step S150, according to the target type information, determine customized driving information corresponding to each non-grass area type.

A type of the customized driving information includes drivable information and non-drivable information. The drivable information characterizes that an area corresponding to the type is an area where the autonomous mobile device can drive. The non-drivable information characterizes that an area corresponding to the type is an area where the autonomous mobile device cannot drive.

Specifically, customized driving information corresponding to a non-grass area type that is same as the target type information is determined as the drivable information; customized driving information corresponding to a non-grass area type that is different from the target type information is determined as the non-drivable information. Exemplarily, when the target type information is stone slab, the customized driving information corresponding to each non-grass area type includes: a stone slab area corresponds to the drivable information, and any non-grass area other than the stone slab area corresponds to the non-drivable information. When the target type information is fallen leaves, the customized driving information corresponding to each non-grass area type includes: a fallen leaves area corresponds to the drivable information, and any non-grass area other than the fallen leaves area corresponds to the non-drivable information.

Step S160, according to the customized driving information corresponding to each non-grass area type, determine a first area in at least one non-grass area.

Specifically, determine the first area in the at least one non-grass area according to the drivable information. The first area is a drivable area.

Step S170, control the autonomous mobile device to drive and/or work in an area to be driven corresponding to a target area.

Wherein, the target area is an area in the target image. The target area includes the first area. The area to be driven is an area in an actual space. The first area is determined in a non-grass area. The autonomous mobile device can drive and/or work in the area to be driven corresponding to the first area, improving a working coverage of the autonomous mobile device in an entire working area. Meanwhile, the first area is determined according to the target type information. The target type information can be related to a user's need. It can be seen that the autonomous mobile device can drive and/or work in a corresponding area according to the user's need, satisfying a personalized need of the user, and improving a user satisfaction.

Taking a lawn mower applied to a lawn as an example, each lawn is different, some lawns are entirely grass, some lawns are provided with a plurality of stone slabs by a user for the user to walk, and some lawns are provided with a pool by a user to increase an ornamental value. A traditional lawn mower takes a completely same measure for different lawns, that is, only moves in a grass area in a lawn, and avoids a stone slab, etc. as an obstacle, thus grass around the stone slab cannot be cut, a cutting coverage is low, and a final cutting effect is also very unappealing, and the cutting effect cannot meet a user expectation.

In an embodiment of the present application, customized cutting can be performed for a different lawn to meet a different need of a user. For example, when a lawn of a user's home is provided with a plurality of stone slabs, and the user hopes that a lawn mower can cut an area around the stone slabs and a gap area between adjacent stone slabs, the autonomous mobile device can perform customized cutting according to the user's need, determine the stone slab as the target type information, so as to drive and cut in an area corresponding to the stone slab, meeting a personalized work need of the user. The target area includes the first area. Taking the stone slab as the target type information for example, when performing customized cutting work, the autonomous mobile device can only move and cut in the area to be driven corresponding to the stone slab.

The target area can also include a grass area. Taking the stone slab as the target type information for example, when performing customized cutting work, the autonomous mobile device can move and cut in the area to be driven corresponding to the stone slab and the grass area.

The autonomous mobile device in the present application is not limited to a lawn mower, and can also be a snow sweeper, a watering machine, a fertilizer applicator, etc.

Different from that an autonomous mobile device can only recognize grass and non-grass, the autonomous mobile device in an embodiment of the present application can further subdivide non-grass to recognize type information of a plurality of non-grass objects, and determine type information of any non-grass object as target type information, making it convenient for the autonomous mobile device to determine a non-grass area same as the target type information as a drivable area according to the target type information, and call an algorithm corresponding to the target type information to work in the drivable area, improving a mowing efficiency and a completion degree of the autonomous mobile device in an entire working area. The recognizable non-grass object in the present application is not limited to the above several types.

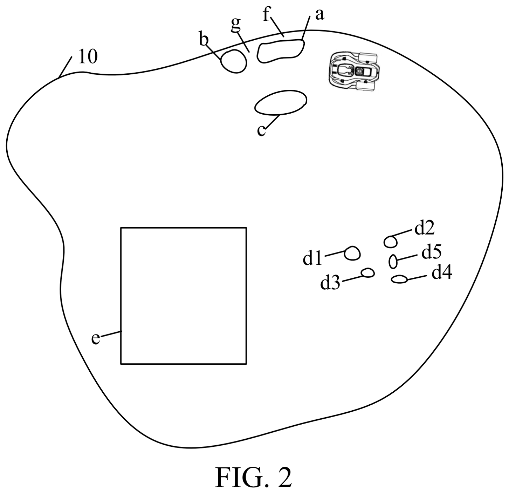

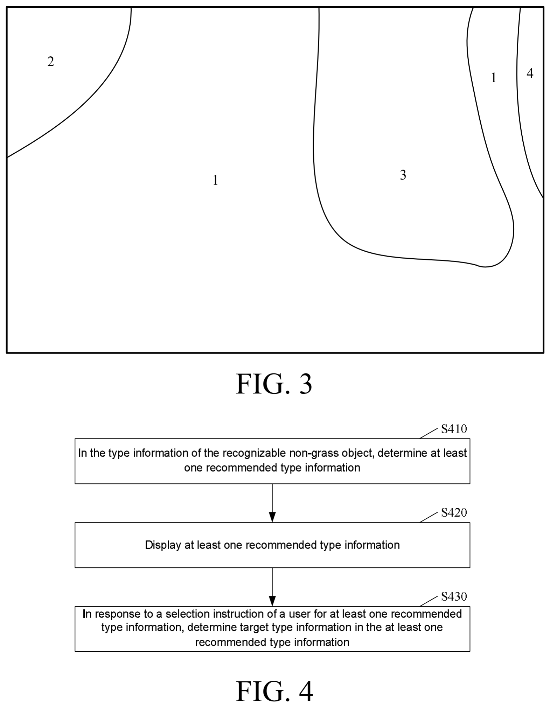

Figure 2 shows a schematic diagram of a lawn mower moving in a working area according to some embodiments of the present application. With reference to Figure 2 for an exemplary description, in Figure 2, 10 represents a boundary of the working area, a, b, and e represent a stone slab, c represents a mud ground, d1, d2, d3, d4, and d5 represent a fallen leaf or a fallen flower, f represents an area between the stone slab a and the boundary 10, and g represents an area between the stone slab a and the stone slab b. Recognition processing is performed on a target image taken when the lawn mower is at a position as shown in Figure 2, and a recognition result obtained is as shown in Figure 3. In Figure 3, a grass area is represented by 1, a mud ground area is represented by 2, a stone slab area is represented by 3, and an other area is represented by 4. The other area 4 characterizes an area corresponding to an other non-grass other than the grass area, the stone slab, the mud ground, and the fallen leaf (for example, an area outside the boundary 10, a non-grass area of which a specific type cannot be recognized by a machine, etc.).

Exemplarily, when the stone slab is the target type information, the target area may include an area 3 in Figure 3. Thus, the lawn mower can move and/or work in the area to be driven corresponding to the area 3, and perform obstacle avoidance (bypassing, stopping, or retreating) for an area 2. Specifically, an area 1 can be cut first, and after completing cutting of the area 1, the area 3 is cut, so as to cut grass near the area 3 cleanly.

Exemplarily, when the stone slab is the target type information, the target area can include an area 1 and an area 3 in FIG. 3. Thus, the lawn mower can perform a unified processing on the area 1 and the area 3, and perform a unified cutting in an overall area formed by the area 1 and the area 3, which can further reduce a missed cutting, improve a cutting coverage, and especially improve the cutting coverage at an area f and an area g.

After applying the method in this embodiment, the autonomous mobile device can further reduce a missed cutting and improve a cutting coverage. For example, the cutting coverage around or inside an area a, an area b, an area c, an area d1, an area d2, an area d3, an area d4, and an area d5 can be improved, and the cutting coverage at an area f and an area g can be improved.

In some embodiments, determining the customized driving information corresponding to each non-grass area type according to the target type information further includes: according to the target type information, determining a target area type matching the target type information in the non-grass area types; determining the customized driving information corresponding to the target area type as drivable information. In other words, an area belonging to a non-grass area type that matches the target type information is determined as a drivable area, and the area can serve as the first area.

Exemplarily, when the target type information is mud ground, and the non-grass area types include mud ground, fallen leaves, and stone slabs, then the target area type matching the target type information is mud ground. Further, an area corresponding to the mud ground is a drivable area.

In an embodiment of the present application, by determining the customized driving information of a non-grass area type matching the target type information as drivable information, when the autonomous mobile device mows grass in the working area and approaches an area corresponding to the non-grass area type, instead of changing a traveling path in advance for obstacle avoidance, the autonomous mobile device can treat the area corresponding to the non-grass area type as a drivable area and perform an operation in the drivable area, improving a work efficiency and a work coverage.

In some embodiments, customized driving information corresponding to any type other than the target area type in the non-grass area types can be determined as non-drivable information; based on the non-drivable information, a non-drivable area is determined in at least one non-grass area, and the autonomous mobile device avoids a spatial area corresponding to the non-drivable area during movement.

In some embodiments, determining the target area type matching the target type information in the non-grass area types according to the target type information further includes: determining configuration information according to the target type information; based on the configuration information, determining the target area type in the non-grass area types.

The configuration information is used to characterize whether each non-grass area type matches the target type information. Exemplarily, the configuration information has a configuration parameter corresponding to type information of a certain number of recognizable non-grass objects. For example, the type information of recognizable non-grass objects includes a mud ground type, a stone slab type, a fallen leaves type, and a pool type. When the type information of a recognizable non-grass object is determined as the target type information, a configuration parameter of the type information of the non-grass object is set to 1.

Exemplarily, a user selects to determine a stone slab and a mud ground as the target type information according to a lawn situation of the working area, then a configuration parameter representing stone slab type information and mud ground type information in the configuration information is set to 1. For details, refer to Table 1.

**Table 1: Configuration information when the target type information is stone slab and mud ground.**

| Stone slab | Mud ground | Fallen leaves |
|---|---|---|
| 0 | 0 | 0 |
| 1 | 1 | 0 |

As shown in Table 1, 000 in a second row of the table represents a configuration parameter corresponding to type information of each non-grass object when the target type information is not determined. 110 in a third row of the table represents a configuration parameter corresponding to type information of each non-grass object when the target type information is determined. According to Table 1, it can be known that the target area type in the non-grass area types is a stone slab type and a mud ground type.

In an embodiment of the present application, determining the target area type in the non-grass area types based on the configuration information, on one hand, a replicability of the solution is high and can be applied in various work situations, and on the other hand, it is more convenient for the autonomous mobile device to determine the target area type.

In some embodiments, a recognition result obtained by an image recognition model processing a target image also includes a dangerous area and a non-dangerous area. The non-dangerous area includes at least one non-grass area. The dangerous area characterizes an area into which the autonomous mobile device is forbidden to enter. In other words, the dangerous area and the non-dangerous area are divided based on a consideration factor of whether a danger is caused to the autonomous mobile device.

Therefore, under a normal circumstance, a grass area can be regarded as a non-dangerous area. Correspondingly, a part of a non-grass area (for example, a non-grass area of an unrecognizable non-grass object) can be regarded as a dangerous area, or an area other than the grass area and the non-grass area can be regarded as a dangerous area. Exemplarily, the dangerous area can include an area other than the grass area and a non-grass area corresponding to a recognizable non-grass object, for example, an area enclosed by a suspended fence, an area enclosed by a grounded fence, a pool, a ditch, a soft soil area, an area where an irrigation facility is located, an area where a person or an animal is located, an area outside a working area, etc. Wherein, the soft soil area refers to an area where a soil hardness is less than a hardness threshold, and the autonomous mobile device may be trapped when walking on the soft soil area.

In some embodiments, a recognition result obtained by an image recognition model processing a target image also includes at least one grass area. A grass area type of the grass area corresponds to a recognizable grass type. The recognizable grass type characterizes a type of a grass object that the autonomous mobile device can recognize.

Based on the above, a control method in some embodiments of the present application also includes determining a second area in at least one grass area. Further, a target area includes a first area and the second area. Controlling the autonomous mobile device to drive and/or work in an area to be driven corresponding to the target area includes: controlling the autonomous mobile device to drive and/or work in the area to be driven corresponding to the first area and the second area. Specifically, a grass object is an object in an actual space. The second area can be all grass areas, or can be one or more of a plurality of grass areas.

In some embodiments, a second area where an autonomous mobile device can perform an operation is determined according to a grass area, and the autonomous mobile device is controlled to drive and/or work in an area to be driven corresponding to a first area and the second area. By subdividing the grass area and a non-grass area, an area where the autonomous mobile device can drive is determined, which further improves a work efficiency of the autonomous mobile device and meets a personalized customization need of a user. The grass area can be subdivided according to a variety of grass, an area corresponding to a specific variety of grass is used as the second area according to a use need, and the autonomous mobile device is controlled to drive and/or work in the area to be driven corresponding to the first area and the second area. Alternatively, the grass is not subdivided, and all grass areas are used as the second area.

In some embodiments, controlling the autonomous mobile device to drive and/or work in an area to be driven corresponding to a first area and a second area includes: according to the second area, determining an external polygon area (for example, a convex hull) of the second area; determining an overlapping area between the external polygon area and the first area; performing a combination processing on the overlapping area and the first area to obtain a combination area corresponding to the overlapping area and the first area; controlling the autonomous mobile device to drive and/or work in the area to be driven corresponding to the combination area.

Figure 4 shows a flow diagram of determining at least one target type information according to some embodiments of the present application. The embodiment shown in Figure 4 is an extension based on the embodiment shown in Figure 1. Differences between the embodiment shown in Figure 4 and the embodiment shown in Figure 1 are described below with emphasis, and same parts are not described again.

As shown in Figure 4, in some embodiments of the present application, determining at least one target type information in type information of a recognizable non-grass object includes following steps.

Step S410, in the type information of the recognizable non-grass object, determine at least one recommended type information.

The recommended type information can be any one or more of the type information of the non-grass object. Exemplarily, when the type information of the recognizable non-grass object includes a stone slab and a fallen leaf, any one of the stone slab and the fallen leaf can be determined as the recommended type information, or the stone slab and the fallen leaf are determined as the recommended type information.

Step S420, display at least one recommended type information.

Exemplarily, an autonomous mobile device or a user terminal displays at least one recommended type information.

For example, a display screen is provided in the autonomous mobile device, and the at least one recommended type information determined above can be displayed.

For another example, after determining at least one recommended type information in the type information of the recognizable non-grass object, the autonomous mobile device sends the at least one recommended type information to a user terminal (such as a mobile phone, a computer, etc.). The user terminal receives the at least one recommended type information sent by the autonomous mobile device and displays the at least one recommended type information.

Step S430, in response to a selection instruction of a user for at least one recommended type information, determine target type information in the at least one recommended type information.

Exemplarily, from the recommended type information displayed on a display screen of an autonomous mobile device, a user clicks a selected recommended information type. After receiving the selection instruction of the user, the autonomous mobile device determines the recommended information type selected by the user as the target information type. Alternatively, the user selects a required recommended type information in a terminal and sends the selected recommended type information to the autonomous mobile device, and the autonomous mobile device determines the recommended type information selected by the user as the target type information.

For a user, an understanding degree of a situation of a working area is relatively high. Therefore, this embodiment of the present application determines the target type information from at least one recommended type information through a selection instruction of the user, which can improve an adaptation degree between the target type information and the working area, and make the target type information more adapt to an actual need of the user. In addition, this embodiment of the present application considers a selection of the user, further integrates a user need into an operation process of the autonomous mobile device in the working area, makes the operation of the autonomous mobile device in the working area more in line with the selection of the user, and satisfies a personalized need of the user.

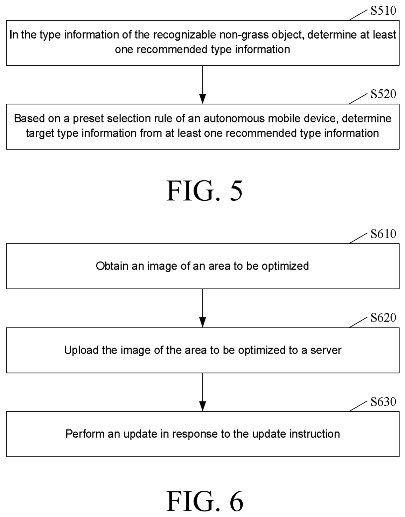

Figure 5 shows a flow diagram of determining at least one target type information according to another embodiment of the present application. The embodiment shown in Figure 5 is an extension based on the embodiment shown in Figure 1. Differences between the embodiment shown in Figure 5 and the embodiment shown in Figure 1 are described below with emphasis, and same parts are not described again.

As shown in Figure 5, in some embodiments of the present application, determining at least one target type information in type information of a recognizable non-grass object includes following steps.

Step S510, in the type information of the recognizable non-grass object, determine at least one recommended type information.

The recommended type information can be any one or more of the type information of the non-grass object.

Step S520, based on a preset selection rule of an autonomous mobile device, determine target type information from at least one recommended type information.

The preset selection rule of the autonomous mobile device can be customized when the autonomous mobile device leaves a factory, or can be customized by a user of the autonomous mobile device. Exemplarily, the preset selection rule can be constructed according to an area, a shape, or a number of areas corresponding to each recommended type information. Exemplarily, the preset selection rule is to take type information corresponding to a largest area in the recommended type information as the target type information, or to take type information corresponding to a smallest number of areas in the recommended type information as the target type information, or to take type information corresponding to a regular shape of an area in the recommended type information as the target type information.

In this embodiment of the present application, an autonomous mobile device can autonomously determine target type information from at least one recommended type information. Combined with that a user can determine the target type information from the at least one recommended type information as described above, a solution in this embodiment of the present application meets an operation need of the autonomous mobile device in a different operation situation. For example, when the user selects, the recommended type information selected by the user can be preferentially determined as the target type information. When the user does not select, the recommended type information selected by the autonomous mobile device can be determined as the target type information.

In some embodiments, for a step S410 and a step S510 in the embodiments shown in Figure 4 and Figure 5 (in type information of a recognizable non-grass object, determine at least one recommended type information), the following manner can be used for implementation.

Implementation manner one, determine date information; according to the date information and a preset seasonal recommendation rule, in the type information of the recognizable non-grass object, determine at least one recommended type information.

Exemplarily, since there are many fallen leaves in autumn, it can be set to determine fallen leaves as recommended type information in autumn.

Exemplarily, a preset seasonal recommendation rule can also be determined according to a working area to be weeded. Specifically, determine a type of grass in the working area, determine a seasonal growth law of the grass according to the type of the grass, and determine the preset seasonal recommendation rule according to the seasonal growth law of the grass.

Specifically, determine a season to which a date represented by the date information belongs, determine a seasonal recommendation rule matching the season to which the date represented by the date information belongs from the preset seasonal recommendation rule, and then determine the recommended type information.

In some embodiments, using a preset seasonal recommendation rule to determine at least one recommended type information meets a need of an autonomous mobile device under a use in a different season, and improves a mowing coverage of the autonomous mobile device in a different situation.

Implementation manner two, determine distribution state information corresponding to each type of recognizable non-grass object; according to the distribution state information, in the type information of the recognizable non-grass object, determine at least one recommended type information.

The distribution state information characterizes a distribution state of the recognizable non-grass object in a working area. Exemplarily, the distribution state information includes at least one of an area, a position, a shape, and an angle. Further, an area of the non-grass object can be determined by calculating a number of pixels of the non-grass object.

In some embodiments, using distribution state information of a recognizable non-grass object to determine at least one recommended type information considers a distribution situation of the recognizable non-grass object, which makes a determination of the recommended type information more reasonable, and a matching degree between the recommended type information and a current working area situation is higher.

Further, the distribution state information includes a total area. Determining the distribution state information corresponding to each type of recognizable non-grass object includes: obtaining a first historical image; based on the first historical image, determining a total area corresponding to each type of recognizable non-grass object.

Exemplarily, according to a first historical image, an area of a stone slab in the first historical image is accumulated to obtain a total area of the stone slab in all the first historical image. Specifically, the first historical image includes a historical image collected by an autonomous mobile device during running a preset distance in a working area, or a historical image collected by the autonomous mobile device during running a preset time in the working area, or a historical image collected by the autonomous mobile device during running a preset number of times in the working area.

In this embodiment of the present application, a total area corresponding to a recognizable non-grass object is determined according to a first historical image, and the first historical image includes a plurality of types, which meets a total area calculation need of an autonomous mobile device under a different work condition.

Further, according to the distribution state information, determining at least one recommended type information in the type information of the recognizable non-grass object includes: according to type information corresponding to a total area that meets a first preset condition, in the type information of the recognizable non-grass object, determining at least one recommended type information.

Exemplarily, one type information corresponding to a largest total area in the type information of a recognizable non-grass object can be used as the recommended type information. Alternatively, several type information corresponding to a larger total area in the type information of the recognizable non-grass object can be used as the recommended type information.

In some embodiments, according to a respective total area of each recognizable non-grass object, at least one recommended type information is determined. Specifically, according to type information corresponding to a total area meeting a first preset condition, the at least one recommended type information is determined. A method for determining the recommended type information is enriched, and a need for determining the recommended type information in a different situation is met. On a basis of reasonably determining the recommended type information, a mowing coverage of an autonomous mobile device in a different situation is improved.

Figure 6 shows a flow diagram of a control method according to other embodiments of the present application. The embodiment shown in Figure 6 is an extension based on the embodiment shown in Figure 1. Differences between the embodiment shown in Figure 6 and the embodiment shown in Figure 1 are described below with emphasis, and same parts are not described again.

As shown in Figure 6, in this embodiment of the present application, the control method also includes following steps.

Step S610, obtain an image of an area to be optimized.

The image of the area to be optimized includes an image of the area to be optimized taken by an autonomous mobile device and/or an image of the area to be optimized taken by a user terminal device.

Exemplarily, a user takes a photo of a grass area or a non-grass area with an unsatisfactory mowing effect to obtain an image of an area to be optimized, for example, an area that the user wants to cut but a lawn mower has not cut, or a grass area with a unique shape that the lawn mower has not recognized as grass.

Exemplarily, an image of an area to be optimized taken by an autonomous mobile device can be determined from a number of target images of a working area automatically taken by the autonomous mobile device. Or, when the autonomous mobile device detects a relatively large number of collisions during movement, the autonomous mobile device takes an image of an area with a relatively large number of collisions, and an image taken at this time is used as the image of the area to be optimized. Or, a user has a customized area to be optimized. When the autonomous mobile device moves to the area to be optimized, the autonomous mobile device is controlled to stop moving forward, and an image of the area to be optimized is taken.

Step S620, upload the image of the area to be optimized to a server.

A purpose of Step S620 is to enable the server to perform an analysis based on the image of the area to be optimized, determine a need content to be optimized by a user, and generate an update instruction for the need content.

Step S630, perform an update in response to the update instruction.

Exemplarily, in response to an update instruction, an autonomous mobile device optimizes an image recognition model. Or, in response to an update instruction, the autonomous mobile device optimizes a control strategy of the autonomous mobile device.

In some embodiments, when a user is not satisfied with a mowing effect under target type information, the user can control an autonomous mobile device to perform an update by an active reporting manner. Or, after a number of collisions of the autonomous mobile device is greater than a preset number of times, the autonomous mobile device actively performs an update. Through a solution in this embodiment, different optimization needs of the user can be met, and a mowing efficiency of the autonomous mobile device is higher.

In some embodiments, uploading an image of an area to be optimized to a server further includes: uploading the image of the area to be optimized and user need information to the server, so that the server generates at least one customized recognition model and an update instruction based on the image of the area to be optimized and the user need information.

Exemplarily, user need information characterizes a need of a user for a mowing effect of an autonomous mobile device. The user need information can be in a text form, or can be in an audio and video form. In addition, a server simultaneously obtains a device ID of the autonomous mobile device, and finds an image of an area to be optimized taken by the device ID in a preset storage space according to the device ID.

In this embodiment of the present application, an image recognition model may not be unchangeable. When a user is not satisfied with a mowing effect, or when an autonomous mobile device determines that the image recognition model needs to be optimized according to a driving situation, a server re-generates a customized recognition model according to an image of an area to be optimized and user need information. Compared with an initial image recognition model, training data of the customized recognition model reflects a need of the user, so that the mowing effect of the autonomous mobile device satisfies the need of the user to a greatest extent.

In some embodiments, performing an update in response to an update instruction further includes: obtaining a customized recognition model in response to the update instruction.

Further, before determining a recognition result by performing recognition processing on a target image based on an image recognition model, the control method also includes: when a customized recognition model is obtained, determining the image recognition model in an initial recognition model of an autonomous mobile device and the customized recognition model based on a user selection instruction; or, when the customized recognition model is obtained, determining the customized recognition model as the image recognition model.

In other words, when a customized recognition model and an initial recognition model both exist, an image recognition model is determined from the customized recognition model and the initial recognition model according to a selection of a user. At this time, a need of the user is referred to. When only the customized recognition model exists, the customized recognition model is directly determined as the image recognition model. Through a solution in this embodiment, on one hand, a real-time need of the user is maximized, and on the other hand, a mowing efficiency of an autonomous mobile device is improved.

In some embodiments, obtaining an image of an area to be optimized further includes: when a second preset condition is met, generating a first warning information; obtaining the image of the area to be optimized corresponding to the first warning information.

Exemplarily, a second preset condition includes: in a time period of a preset duration, a number of obstacle collisions of an autonomous mobile device exceeds a preset number of times, or, the autonomous mobile device detects being stuck, or, the autonomous mobile device detects being entangled.

Exemplarily, a first warning information can be a voice light on an autonomous mobile device, or can be a reminder on a user terminal. The first warning information includes a different type. Exemplarily, the first warning information includes at least one of an obstacle collision, a stuck, or an entanglement. Further, an image taken for a period of time before the first warning information is generated, or an image manually taken by a user and corresponding to when the first warning information is generated can be obtained.

In this embodiment of the present application, when an autonomous mobile device meets a second preset condition, a first warning information is generated, and an image of an area to be optimized corresponding to the first warning information is obtained. Through a solution in this embodiment of the present application, an intelligence degree of the autonomous mobile device can be improved, and a use experience of a user on the autonomous mobile device can be improved.

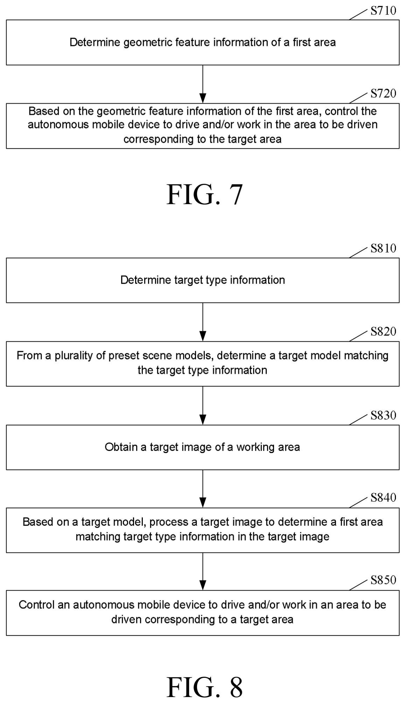

Figure 7 shows a flow diagram of controlling an autonomous mobile device to drive and/or work according to some embodiments of the present application. The embodiment shown in Figure 7 is an extension based on the embodiment shown in Figure 1. Differences between the embodiment shown in Figure 7 and the embodiment shown in Figure 1 are described below with emphasis, and same parts are not described again.

As shown in Figure 7, in some embodiments of the present application, controlling the autonomous mobile device to drive and/or work in an area to be driven corresponding to a target area includes following steps.

Step S710, determine geometric feature information of a first area.

Exemplarily, the geometric feature information includes one or more of a length, an area, a shape, an area boundary angle, and so on.

Step S720, based on the geometric feature information of the first area, control the autonomous mobile device to drive and/or work in the area to be driven corresponding to the target area.

In some embodiments, a target area includes a first area, that is, an autonomous mobile device controls the autonomous mobile device to drive and/or work in an area to be driven corresponding to the target area according to geometric feature information of the first area in the target area.

In some embodiments, a target area includes a first area and a second area, that is, an autonomous mobile device controls the autonomous mobile device to drive and/or work in an area to be driven corresponding to the target area according to geometric feature information of the first area.

In some embodiments, a target area includes a first area and a second area, that is, an autonomous mobile device controls the autonomous mobile device to drive and/or work in an area to be driven corresponding to the target area according to geometric feature information of the first area and a grass area.

In this embodiment of the present application, according to geometric feature information of a target area, an autonomous mobile device is controlled to drive and/or work in an area to be driven corresponding to the target area, which enriches a work condition of the autonomous mobile device, improves a mowing efficiency of the autonomous mobile device, and avoids a missed mowing of grass.

In combination with Figure 7, in some embodiments, when geometric feature information of a non-grass area (a first area) in a target area does not meet a third preset condition, an autonomous mobile device is controlled to drive and/or work in an area to be driven corresponding to the target area. The control method further includes: when the geometric feature information of the non-grass area in the target area meets the third preset condition, controlling the autonomous mobile device to perform obstacle avoidance.

Exemplarily, when target type information is determined, geometric feature information of a non-grass area in a target area can refer to a sum of areas of the non-grass area matching the target type information in a target image. A third preset condition can be that the sum of the areas of the non-grass area matching the target type information in the target image is greater than 70% of an area of the target image. When the sum of the areas of the non-grass area matching the target type information in the target image is greater than 70% of the area of the target image, an autonomous mobile device is controlled to perform obstacle avoidance for the non-grass area matching the target type information with an area greater than 70%, and not to perform mowing.

For example, the target type information is a stone slab. When an autonomous mobile device recognizes that a sum of areas of the stone slab in a currently collected target image is greater than 70% of an area of the currently collected target image, the autonomous mobile device is controlled to perform obstacle avoidance for the stone slab.

In some embodiments, different from performing a comprehensive cutting on a real grass, when an area of a non-grass area in a target area is in an appropriate range, the non-grass area can be cut; and when the area of the non-grass area in the target area is too large, the non-grass area can be used as an obstacle for obstacle avoidance, because that the area of the non-grass area in the target area is too large can indicate that there is basically no real grass. In combination with Figure 2, an area of a stone slab e in Figure 2 is too large. When an autonomous mobile device moves to the stone slab e, once it is found that an area occupied by the stone slab in a currently collected target image is too large, obstacle avoidance can be performed to avoid an invalid cutting on an inner area of the stone slab e. In this embodiment of the present application, different response strategies for a non-grass area are determined according to geometric feature information of the non-grass area in a target area, which can avoid an invalid cutting, improve a work efficiency, avoid a waste of energy, and avoid a damage to a machine.

In other embodiments, the control method also includes: when target type information is not determined, obtaining a working area image of a working area, and when geometric feature information of any non-grass area in the working area image meets a fourth preset condition, controlling an autonomous mobile device to perform obstacle avoidance. Wherein, the fourth preset condition is different from a third preset condition.

Exemplarily, when target type information is not determined, an autonomous mobile device takes a working area image in real time during a movement process. Geometric feature information of any non-grass area in the working area image can refer to a respective area of each type of non-grass area. A fourth preset condition can be that an area of a certain type of non-grass area in the working area image is greater than 30% of an area of the working area image. That is, when the area of the certain type of non-grass area is greater than 30% of the area of the working area image, the autonomous mobile device is controlled to perform obstacle avoidance for the certain type of non-grass area and not to perform mowing.

In some embodiments, when target type information is not determined, that is, in a default work mode of an autonomous mobile device, recognition processing can be performed on a working area image to distinguish grass from various types of non-grass. When an area of a certain type of non-grass is greater than 30% of an area of the working area image, obstacle avoidance is performed for the certain type of non-grass area. For example, in the default work mode, the autonomous mobile device only cuts a grass area. A recognition result corresponding to the working area image includes grass, a stone slab, and a fallen leaf. For the stone slab in the non-grass, when a sum of areas of the stone slab is greater than 30% of a working area, the autonomous mobile device is controlled to perform obstacle avoidance for the stone slab and not to perform mowing.

By comparison, in this embodiment of the present application, when target type information is selected, for a non-grass area corresponding to the target type information, even when an area occupied by the non-grass area in a target image is relatively large (not too large), work can still be performed, improving a work coverage of a corresponding area. When the target type information is not selected, when an area occupied by a certain type of non-grass area in a working area image is relatively large, obstacle avoidance is performed. In this embodiment of the present application, different response strategies are adopted under different work conditions, which can improve a work efficiency and a work coverage, and meet a personalized need of a user.

In some embodiments, the control method further includes: controlling an autonomous mobile device to perform obstacle avoidance according to an other area. The other area is an area other than a grass area and a non-grass area corresponding to a recognizable non-grass object. When encountering the other area, the autonomous mobile device can perform obstacle avoidance, so as to avoid going out of a boundary or colliding with an obstacle.

In combination with Figure 7, in some embodiments, the control method further includes: when geometric feature information of a target area meets a fifth preset condition, controlling an autonomous mobile device to perform obstacle avoidance. Wherein, the fifth preset condition includes that an area of a non-grass area in the target area is greater than a first area.

Exemplarily, a first area is 70% of an area of a target image. For example, target type information is a stone slab. When in a currently collected target image, an area of the stone slab is greater than 70% of the area of the target image, an autonomous mobile device is controlled to perform obstacle avoidance for the stone slab.

In other embodiments, the control method also includes: when an area of any non-grass area in a non-target area is greater than a second area, controlling an autonomous mobile device to perform obstacle avoidance, wherein a first area is greater than the second area.

Exemplarily, target type information is a stone slab, and a target image includes grass, the stone slab, a fallen leaf, and a mud ground, then a non-target area is a fallen leaves area and a mud ground area. Exemplarily, a second area is 30% of an area of the target image. For the fallen leaves area in the non-target area, when an area of the fallen leaves area accounts for 32% of the area of the target image, an autonomous mobile device is controlled to perform obstacle avoidance for the fallen leaves area. For the mud ground area in the non-target area, when an area of the mud ground area accounts for 36% of the area of the target image, the autonomous mobile device is controlled to perform obstacle avoidance for the mud ground area.

In the above embodiment, for geometric feature information in a target area and an area of any non-grass area in a non-target area, a plurality of conditions for an autonomous mobile device to perform obstacle avoidance are set, which meets a work need of the autonomous mobile device in a different work environment. A solution in this embodiment further improves a mowing coverage of the autonomous mobile device.

In some embodiments, an autonomous mobile system also includes a control apparatus. The control apparatus is configured to control an autonomous mobile device.

Exemplarily, a control apparatus includes at least one of a terminal, a cloud server, and a remote controller.

Exemplarily, a user can select recommended scene information in a terminal, and send the recommended scene information to an autonomous mobile device through the terminal. Or, the user controls a traveling, a stopping, and an operation process of the autonomous mobile device through the terminal. Or, the user sends an optimization instruction through the terminal, and after taking an image of an area to be optimized by using the terminal, further uploads the image to a cloud server through the terminal.

Exemplarily, a cloud server can optimize an image recognition model according to an obtained image of an optimization area to obtain a customized recognition model, and send the customized recognition model to an autonomous mobile device. Or, after obtaining the customized recognition model, the cloud server sends the customized recognition model to a terminal, and a user selects whether to replace an initial recognition model with the customized recognition model.

Exemplarily, a remote controller can control a forward direction and a forward angle, a traveling path, whether to stop, and so on of an autonomous mobile device.

In some embodiments, after determining a recognition result by performing recognition processing on a target image based on an image recognition model, the method also includes: in at least one non-grass area, determining a candidate area meeting a first condition;
determining a first area in the at least one non-grass area according to customized driving information corresponding to each non-grass area type includes: determining the first area in the candidate area according to the customized driving information corresponding to each non-grass area type.

An autonomous mobile device is provided with a visual sensor (such as a camera), can obtain an image based on the visual sensor, perform image recognition processing on the image, and determine each sub-area and an area type of the image. For example, binary image recognition processing can be performed on the image to determine a grass area and a non-grass area in the image.

The autonomous mobile device can also perform multi-class image recognition processing on an image to determine a grass area, a boundary area, an obstacle area, a plurality of different types of non-grass areas, etc. in the image. After determining a sub-area and an area type in the image, filtering processing can be performed on the sub-area to determine a candidate area that meets a first condition in the sub-area. The first condition can be: an area type of the sub-area is any type of a stone slab, soil (a mud ground), a fallen leaf (or a fallen flower). Wherein, the mud ground refers to an area where a soil hardness is greater than or equal to a hardness threshold, or refers to an area where a soil water content is greater than or equal to a water content threshold. In other embodiments, an area type of the candidate area can also be an area with a low grass density.

A traditional lawn mower only cuts a grass area, and does not cut any non-grass area at all. But some lawns are provided with a plurality of stone slabs by a user for the user to walk, and a traditional lawn mower only moves in a grass area in a lawn. For another example, for soil and a fallen leaf of a lawn, a traditional lawn mower only moves in a grass area in the lawn, which results in an inability to cut grass around the stone slab, the soil, and the fallen leaf. A cutting coverage is low, and a final cutting effect is also very unappealing, and the cutting effect cannot meet a user expectation, and the user needs to perform an additional manual cutting.

Although a candidate area in this embodiment is not a grass area, when the candidate area meets a certain condition, the candidate area can also be used as an area to be driven. A first area can be determined in the candidate area according to a certain condition, and an autonomous mobile device is controlled to drive and/or work in a grass area and the first area. Thus, the autonomous mobile device can not only cut an identified grass area, but also can cut a qualified non-grass area, improving a cutting coverage. A number of a sub-area, the candidate area, and the first area in this embodiment is not limited. A judgment can be made on the candidate area one by one to determine whether the candidate area can be determined as the first area, or a judgment can be made on a plurality of candidate areas at a same time.

In this embodiment, after a first area is determined, the first area can be cut separately, or the first area and a grass area can be merged for cutting; cutting can be based on a path planning manner, or can be based on a random cutting manner.

In some embodiments, a first condition includes that an area type is a safe area type. A safe area type means that when an autonomous mobile device moves or works in a space corresponding to the area, a movement, a work or a structure of the autonomous mobile device will not be obstructed or damaged; for example, the autonomous mobile device will not be stuck, trapped, entangled, collided, or obstructed from moving in a safe area. A non-grass area meeting the first condition in an image sub-area can be determined as a candidate area.

In some embodiments, a first condition includes that an area type is a stone slab, soil or a fallen leaf.

In some embodiments, determining a first area in a candidate area includes:
determining attribute information of the candidate area;
determining the first area in the candidate area according to the attribute information of the candidate area;
wherein, the attribute information of the candidate area includes one or more of following: an area type, an area, a shape, a side length, a position, and a boundary probability, wherein the boundary probability characterizes a probability that the candidate area is a working area boundary.

In this embodiment, a judgment is made according to attribute information of a candidate area to determine whether the candidate area is suitable for cutting. For example, when an area of the candidate area is too large, or when a shape of the candidate area is a strip shape (a long and thin shape), it can be explained that the candidate area is likely a boundary of a working area, then an autonomous mobile device is controlled to avoid the candidate area, otherwise the autonomous mobile device is easy to drive outside the boundary. When the candidate area is an area suitable for cutting, the autonomous mobile device can be controlled to drive to a vicinity or an inside of the candidate area to cut the candidate area, and cut grass inside or at an edge of the candidate area cleanly.

In some embodiments, a recognition result includes an obstacle area;
determining a first area in a candidate area includes:
determining distribution information of the obstacle area;
determining the first area in the candidate area according to the distribution information of the obstacle area;
wherein, the distribution information of the obstacle area includes one or more of following: a position, an area, a shape, a side length, and a relative position between the obstacle area and the candidate area.

In some embodiments, for a non-grass object, a recognition and a classification of the non-grass object by an autonomous mobile device are relatively detailed. The autonomous mobile device can recognize a stone slab, soil, a fallen leaf, a puddle, a fallen flower, an irrigation head, etc., and the non-grass object corresponds to a non-grass area in an image. An obstacle area is an other area besides a grass area and the non-grass area. The autonomous mobile device cannot determine a specific type of an obstacle in the obstacle area (such as a stool, a toy, a hammer head), and can only collectively refer to the obstacle as the obstacle area.

According to distribution information of an obstacle area and a position of a candidate area, an obstacle distribution situation around the candidate area is determined. When there are many obstacles or a large number of obstacles distributed around the candidate area, an autonomous mobile device is controlled to avoid the candidate area, otherwise a collision is easy to occur and a machine is damaged. When there are few or no obstacles around the candidate area, the autonomous mobile device can be controlled to drive to a vicinity or an inside of the candidate area to cut the candidate area, and cut grass inside or at an edge of the candidate area cleanly.

In some embodiments, determining a first area in a candidate area according to distribution information of an obstacle area includes:
determining an area to be screened in the candidate area according to the distribution information of the obstacle area;
determining attribute information of the area to be screened;
determining the first area in the area to be screened according to the attribute information of the area to be screened;
wherein, the attribute information of the area to be screened includes one or more of following: an area type, an area, a shape, a side length, a position, and a boundary probability, wherein the boundary probability characterizes a probability that the candidate area is a working area boundary.

In this embodiment, first, an area to be screened is screened out from a candidate area according to distribution information of an obstacle area; then, a first area is screened out from the area to be screened according to attribute information of the area to be screened.

In some embodiments, a double screening can be performed on a candidate area according to distribution information of an obstacle area and attribute information of the candidate area, so as to determine a first area.

In some embodiments, determining an area to be screened in a candidate area according to distribution information of an obstacle area includes:
determining a peripheral polygon area corresponding to the candidate area;
determining an overlapping area between the obstacle area and the peripheral polygon area according to the distribution information of the obstacle area;
determining an area of an other region in the peripheral polygon area, wherein the other region is a region in the peripheral polygon area except the candidate area;
determining a ratio between the overlapping area and the area of the other region;
when the ratio is less than a first threshold, determining the candidate area as the area to be screened.

A peripheral polygon area is an external polygon of a candidate area, namely the convex hull, and preferably, the peripheral polygon area can be a circumscribed rectangle of the candidate area. The candidate area can be a stone slab area, a fallen leaves area or a soil area. Taking a fallen leaf as an example of the candidate area, according to distribution information of an obstacle area (for example, a position and an area), an area of a part of the obstacle area located in the peripheral polygon area is determined, that is, an overlapping area; then an area of an other region in the peripheral polygon area except the fallen leaves area is determined; a ratio between the overlapping area and the area of the other region is determined; when the ratio is less than a first threshold, the candidate area can be determined as an area to be screened; when the ratio is not less than the first threshold, it can be explained that there are many obstacles around the candidate area, then an autonomous mobile device cannot move in a space corresponding to the candidate area. Exemplarily, the first threshold can be 12%. In a subsequent step, a first area can be determined in the area to be screened based on a same or a different screening rule.

Alternatively, a peripheral polygon area is an area range formed after a candidate area is expanded outward by several pixels.

In some embodiments, determining a first area in an area to be screened according to attribute information of the area to be screened includes:
when an area type of the area to be screened is a stone slab, and an area of the area to be screened is less than a second threshold, determining the area to be screened as the first area.
When an area to be screened is a stone slab area, a judgment of whether the area is a first area can be made according to an area of the stone slab area. For example, when an area of a circumscribed rectangle area of the stone slab area is less than 70cm×70cm, the stone slab area can be determined as the first area; when the area of the circumscribed rectangle area of the stone slab area is not less than 70cm×70cm, it can be explained that the stone slab area is very likely an area outside a boundary, for example, a road, a highway, a sidewalk outside a lawn, etc., then an autonomous mobile device cannot move in a space corresponding to the stone slab area.

In some embodiments, determining a first area in an area to be screened according to attribute information of the area to be screened includes:
when an area type of the area to be screened is a stone slab, and a length and a width of the area to be screened are both less than a distance threshold, determining the area to be screened as the first area.

When an area to be screened is a stone slab area, a judgment of whether the area is a first area can be made according to a length and a width of the stone slab area. For example, when the length and the width of the stone slab area are both less than 70cm, the stone slab area can be determined as the first area; when the length and the width of the stone slab area are both not less than 70cm, it can be explained that the stone slab area is very likely an area outside a boundary, for example, a road, a highway, a sidewalk outside a lawn, etc., then an autonomous mobile device cannot move in a space corresponding to the stone slab area.

In some embodiments, a distance threshold can be set according to an actual need. For example, in a daytime, the distance threshold is 100cm to 130cm, and at a same time, when an autonomous mobile device recognizes that a stone path is connected with a boundary of a working area, the distance threshold is 90cm; at night, the distance threshold is 70cm.

In some embodiments, determining a first area in an area to be screened according to attribute information of the area to be screened includes:
when an area type of the area to be screened is a fallen leaf, and a ratio between an area of the area to be screened and an image area is less than a third threshold, determining the area to be screened as the first area.

In this embodiment, when an area to be screened is a fallen leaves area, a judgment of whether the area is a first area can be made according to an area of the fallen leaves area. For example, when a ratio between the fallen leaves area and an area of a whole image is less than 50%, the fallen leaves area can be determined as the first area; when the ratio is not less than 50%, it can be explained that the fallen leaves area is very likely located outside a boundary, for example, a fallen leaves pile placed outside the boundary after a user cleans a lawn, then an autonomous mobile device cannot move in a space corresponding to the fallen leaves area.

In some embodiments, determining a first area in an area to be screened according to attribute information of the area to be screened includes:
when an area type of the area to be screened is soil, and an area of the area to be screened is less than a fourth threshold, determining the area to be screened as the first area;
or, when the area type of the area to be screened is soil, and a shape of the area to be screened is a non-strip shape, determining the area to be screened as the first area.

In this embodiment, when an area to be screened is a soil area, a judgment of whether the area is a first area can be made according to an area or a shape of the soil area. For example, when a pixel occupied by the soil area is less than 3000, the soil area can be determined as the first area; when the pixel occupied by the soil area is not less than 3000, it can be explained that the soil area is very likely located outside a boundary, for example, a road, a highway, a sidewalk outside a lawn, etc., then an autonomous mobile device cannot move in a space corresponding to the soil area. For another example, when a shape of the soil area is a long and thin shape, or is a strip shape, it can be explained that the soil area is very likely located outside a boundary, and is likely a road, a highway, a sidewalk outside a lawn, etc., then the autonomous mobile device cannot move in a space corresponding to the soil area.

In some embodiments, the method also includes:
determining an area in a candidate area other than a first area as a non-drivable area;
controlling an autonomous mobile device to avoid a spatial area corresponding to the non-drivable area.

In this embodiment, a spatial area corresponding to a first area is a drivable area; an area in a candidate area other than the first area is a non-drivable area. A movement track can be made to bypass a spatial area corresponding to a non-drivable area based on a path planning manner, or a control logic such as stopping, turning, retreating, etc. can be adopted when encountering the non-drivable area.

In some embodiments, in an image, an area other than a first area and a grass area can be determined as a non-drivable area.

In addition, some embodiments of the present application also provide a control method, applied to an autonomous mobile system, the autonomous mobile system including an autonomous mobile device, the autonomous mobile device being configured to drive and/or work in a working area, the control method including:
obtaining target type information, the target type information characterizing at least one type of a non-grass object recognizable by the autonomous mobile device;
obtaining a target image of the working area;
based on an image recognition model, performing recognition processing on the target image to determine a first area corresponding to the target type information;
determining a target area, the target area including the first area;
controlling the autonomous mobile device to drive and/or work in an area to be driven corresponding to the target area.

Using a first area corresponding to target type information as an area to be driven, an area corresponding to at least one recognizable non-grass object can be used as the area to be driven, and an autonomous mobile device can move or work on the area.

Taking a lawn mower as an example, the lawn mower can mow grass near the first area and on the first area, avoiding a situation of missed grass near the first area, and improving a mowing coverage and a user satisfaction.

In some embodiments, a first area includes at least one of a stone slab area, a soil area, a fallen leaves area and a fallen flowers area.

In some embodiments, controlling an autonomous mobile device to drive and/or work in an area to be driven corresponding to a target area includes:
determining geometric feature information of the target area;
based on the geometric feature information of the target area, controlling the autonomous mobile device to drive and/or work in the area to be driven corresponding to the target area.

A driving strategy of an autonomous mobile device is adjusted based on geometric feature information of a target area. For example, when the target area is too small, it is not necessary to walk on the target area.

In some embodiments, geometric feature information includes one or more of a length, an area, a shape, and an area boundary angle.

In some embodiments, determining geometric feature information of a target area includes: determining geometric feature information of a first area;
controlling based on the geometric feature information of the target area includes: controlling based on the geometric feature information of the first area.

In some embodiments, a target area includes a first area, that is, an autonomous mobile device controls a driving and/or a working of the autonomous mobile device in an area to be driven corresponding to the target area based on geometric feature information of the first area in the target area.

In some embodiments, a target area includes a first area and a grass area, that is, an autonomous mobile device controls a driving and/or a working of the autonomous mobile device in an area to be driven corresponding to the target area based on geometric feature information of the first area.

In some embodiments, a target area includes a first area and a second area, that is, an autonomous mobile device controls a driving and/or a working of the autonomous mobile device in an area to be driven corresponding to the target area based on geometric feature information of the first area and the grass area.

### Exemplary Apparatus

The method embodiments are described in detail above with reference to Figures 1 to 7. Hereinafter, an apparatus embodiment is described in detail with reference to Figure 8. The description of the method embodiments and the description of the apparatus embodiments correspond to each other, so a part that is not described in detail can be referred to the previous method embodiments.

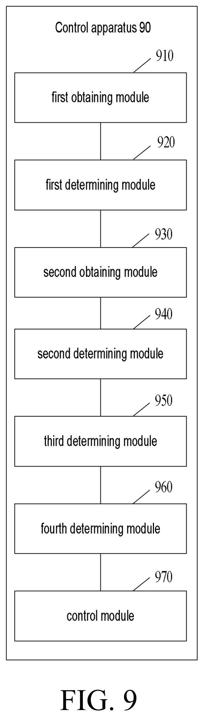

Figure 9 shows a structural diagram of a control apparatus according to some embodiments of the present application. Exemplarily, the control apparatus is applied to an autonomous mobile system. The autonomous mobile system includes an autonomous mobile device. The autonomous mobile device is configured to drive and/or work in a working area. As shown in Figure 9, a control apparatus 90 provided by an embodiment of the present application includes:
a first obtaining module 910, configured to obtain type information of a recognizable non-grass object, the recognizable non-grass object characterizing a non-grass object recognizable by the autonomous mobile device;
a first determining module 920, configured to determine at least one target type information in the type information of the recognizable non-grass object;
a second obtaining module 930, configured to obtain a target image of the working area;
a second determining module 940, configured to determine a recognition result by performing recognition processing on the target image based on an image recognition model, the recognition result including at least one non-grass area, and a non-grass area type of the non-grass area corresponding to a type of the recognizable non-grass object;
a third determining module 950, configured to determine customized driving information corresponding to each non-grass area type according to the target type information, the customized driving information including drivable information or non-drivable information;
a fourth determining module 960, configured to determine a first area in at least one non-grass area according to the customized driving information corresponding to each non-grass area type;
a control module 970, configured to control the autonomous mobile device to drive and/or work in an area to be driven corresponding to a target area, the target area including the first area.

The second obtaining module 930 can obtain a target image from a camera. Each module in the control apparatus 90 can be integrated into a control chip of the autonomous mobile device.

### Recognition Results

Figure 8 shows a flow diagram of a control method according to some embodiments of the present application. Exemplarily, the control method is applied to an autonomous mobile system. The autonomous mobile system includes an autonomous mobile device. The autonomous mobile device is configured to drive and/or work in a working area. As shown in Figure 8, the control method includes following steps.

Step S810, determine target type information.

The target type information is one of at least one type information. The type information corresponds to a recognizable non-grass type. The recognizable non-grass type characterizes a type of a non-grass object recognizable by an autonomous mobile device.

The target type information can be determined by a user, or can be determined by the autonomous mobile device. Exemplarily, a non-grass object includes a stone slab, a fallen leaf, a mud ground. The stone slab can be determined as the target type information, or the mud ground can be determined as the target type information, or a pool and the fallen leaf can be simultaneously determined as the target type information.

Step S820, from a plurality of preset scene models, determine a target model matching the target type information.

The plurality of preset scene models one-to-one correspond to a plurality of target type information. The preset scene model can perform image recognition processing on a target image of a working area.

Step S830, obtain a target image of a working area.

An image capture module can be configured on an autonomous mobile device to obtain the target image. Exemplarily, the image capture module is a camera. The target image has a grass area, a non-grass area corresponding to a recognizable non-grass type, and an other area (such as an obstacle area of which a specific type cannot be recognized, or an area corresponding to a boundary).

Step S840, based on a target model, process a target image to determine a first area matching target type information in the target image.

The target model can perform a personalized classification on a target image, and determine all areas matching the target type information as a first area. For example, the target type information includes a stone slab and a mud ground. A target model is determined from a plurality of preset models according to the stone slab and the mud ground. The target model determines both the stone slab and the mud ground in the target image as the first area. For another example, the target type information is a fallen leaf. A target model is determined from a plurality of preset models according to the fallen leaf. The target model determines the fallen leaf in the target image as the first area.

Step S850, control an autonomous mobile device to drive and/or work in an area to be driven corresponding to a target area.

The target area includes a first area. The target area is an area in a target image. The target area includes the first area. The area to be driven is an area in an actual space.

Similarly, taking a lawn mower applied to a lawn as an example, each lawn is different, some lawns are entirely grass, some lawns are provided with a plurality of stone slabs by a user for the user to walk, and some lawns are provided with a pool by a user to increase an ornamental value. A traditional lawn mower takes a completely same measure for different lawns, that is, only moves in a grass area in a lawn, and avoids a stone slab, etc. as an obstacle, thus grass around the stone slab cannot be cut, a cutting coverage is low, and a final cutting effect is also very unappealing, and the cutting effect cannot meet a user expectation. In an embodiment of the present application, a target model is directly determined from a plurality of preset scene models according to a selection of a user or an autonomous mobile device, and a first area in a target image is determined according to the target model, which is convenient for the autonomous mobile device to drive and/or work in an area to be driven corresponding to a target area. Through a solution in this embodiment, it is convenient for the autonomous mobile device to determine a non-grass area same as target type information as a drivable area according to the target type information, and call an algorithm corresponding to the target type information to work in the drivable area, which improves a mowing efficiency of the autonomous mobile device in an entire working area, and also improves a convenience of determining the first area.

Hereinafter, an electronic device according to an embodiment of the present application will be described with reference to Figure 9. Figure 11 shows a structural diagram of an electronic device according to some embodiments of the present application.

As shown in Figure 9, an electronic device 110 includes one or more processors 1101 and a memory 1102.

The processor 1101 can be a Central Processing Unit (CPU) or an other form of a processing unit with a data processing capability and/or an instruction execution capability, and can control an other component in the electronic device 110 to perform a desired function.

The memory 1102 can include one or more computer program products. The computer program product can include various forms of computer-readable storage media, such as a volatile memory and/or a non-volatile memory. The volatile memory for example can include a Random Access Memory (RAM) and/or a cache memory, etc. The non-volatile memory for example can include a Read-Only Memory (ROM), a hard disk, a flash memory, etc. One or more computer program instructions can be stored on the computer-readable storage media, and the processor 1101 can run the program instructions to implement a method of each embodiment of the present application described above and/or an other desired function. In the computer-readable storage media, various contents such as including target type information, a target image, a first area, a second area, customized driving information corresponding to a non-grass area type, etc. can also be stored.

In one example, the electronic device 110 can also include: an input device 1103 and an output device 1104. These components are interconnected through a bus system and/or an other form of a connection mechanism (not shown).

The input device 1103 can include for example a keyboard, a mouse, and so on.

The output device 1104 can output various information to an outside, including target type information, a target image, a first area, a second area, customized driving information corresponding to a non-grass area type, etc. The output device 1104 can include for example a display, a speaker, a printer, and a communication network and a remote output device connected thereto, etc.

Of course, for a simplification, Figure 9 only shows some of components related to the present application in the electronic device 110, and components such as a bus, an input/output interface, and so on are omitted. In addition to these, according to a specific application situation, the electronic device 110 can also include any other appropriate component.

In addition to the above method and device, an embodiment of the present application can also be a computer program product, which includes a computer program instruction, the computer program instruction, when executed by a processor, causing the processor to execute a step in a method according to each embodiment of the present application described above in this specification.

A program code for performing an operation of an embodiment of the present application can be written in any combination of one or more programming languages. The programming language includes an object-oriented programming language, such as Java, C++, etc., and also includes a conventional procedural programming language, such as a "C" language or a similar programming language. The program code can be executed entirely on a user computing device, partially on the user device, as a stand-alone software package, partially on the user computing device and partially on a remote computing device, or entirely on the remote computing device or a server.

In addition, an embodiment of the present application can also be a computer-readable storage medium, on which a computer program instruction is stored, the computer program instruction, when executed by a processor, causing the processor to execute a step in a method according to each embodiment of the present application described above in this specification.

The computer-readable storage medium can adopt any combination of one or more readable media. A readable medium can be a readable signal medium or a readable storage medium. The readable storage medium for example can include but is not limited to an electrical, a magnetic, an optical, an electromagnetic, an infrared, or a semiconductor system, apparatus, or device, or any combination of the above. A more specific example (a nonexhaustive list) of the readable storage medium includes: an electrical connection having one or more wires, a portable disk, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination of the above.

A basic principle of the present application is described above in combination with a specific embodiment, however, it needs to be pointed out that an advantage, a benefit, an effect, etc. mentioned in the present application are only examples and not a limitation, and it cannot be considered that these advantages, benefits, effects, etc. are necessary for each embodiment of the present application. In addition, specific details disclosed above are only for an exemplary purpose and a purpose of easy understanding, rather than a limitation. The above details do not limit that the present application must be implemented by adopting the above specific details.

A block diagram of a device, an apparatus, an equipment, and a system involved in the present application is only an illustrative example and is not intended to require or imply that a connection, an arrangement, and a configuration must be made in a manner shown in the block diagram. As a person skilled in the art will recognize, these devices, apparatuses, equipments, and systems can be connected, arranged, and configured in any manner. A word such as "include", "comprise", "have", and so on is an open word, which means "include but not limited to", and can be used interchangeably with the word. A word "or" and "and" used here refers to a word "and/or", and can be used interchangeably with the word, unless a context clearly indicates otherwise. A word "such as" used here refers to a phrase "such as but not limited to", and can be used interchangeably with the word.

It also needs to be pointed out that, in a device, an equipment and a method of the present application, each component or each step can be decomposed and/or recombined. These decompositions and/or recombinations should be regarded as an equivalent solution of the present application.

The above description of a disclosed aspect is provided to enable any person skilled in the art to make or use the present application. Various modifications to these aspects will be very obvious to a person skilled in the art, and a general principle defined herein can be applied to an other aspect without departing from a scope of the present application. Therefore, the present application is not intended to be limited to an aspect shown herein, but is to be accorded a widest scope consistent with a principle and a novel feature disclosed herein.

The above description has been given for an illustrative and a descriptive purpose. In addition, the description is not intended to limit an embodiment of the present application to a form disclosed herein. Although a plurality of exemplary aspects and embodiments have been discussed above, a person skilled in the art will recognize a certain variation, a modification, a change, an addition, and a sub-combination of the exemplary aspects and embodiments.

## Claims

1. A control method, **characterized in that** applied to an autonomous mobile system, the autonomous mobile system comprises an autonomous mobile device configured to drive and/or work in a working area (10), the control method comprising:
obtaining type information of recognizable non-grass objects, wherein the recognizable non-grass objects characterize non-grass objects that the autonomous mobile device can recognize;
determining at least one target type information in the type information of the recognizable non-grass objects;
obtaining a target image of the working area (10);
determining a recognition result by performing recognition processing on the target image based on an image recognition model, wherein the recognition result comprises at least one non-grass area, and a non-grass area type of the non-grass area corresponds to the type information of the recognizable non-grass objects;
determining customized driving information corresponding to each of the non-grass area types according to the target type information, wherein types of the customized driving information include drivable information and non-drivable information;
determining a first area in the at least one non-grass area according to the customized driving information corresponding to each of the non-grass area types;
controlling the autonomous mobile device to drive and/or work in an area to be driven corresponding to a target area, wherein the target area comprises the first area.

2. The method according to claim 1, **characterized in that** after determining the recognition result by performing recognition processing on the target image based on the image recognition model, the method further comprises: determining a candidate area meeting a first condition in the at least one non-grass area;
wherein determining the first area in the at least one non-grass area according to the customized driving information corresponding to each of the non-grass area types comprises: determining the first area in the candidate area according to the customized driving information corresponding to each of the non-grass area types.

3. The method according to claim 2, **characterized in that** the first condition comprises that an area type is a safe area type or a non-dangerous area type.

4. The method according to claim 2 or 3, **characterized in that** the first condition comprises that an area type is stone slab (a, b, e), soil (c) or fallen leaves (d4, d5).

5. The method according to any one of claims 2 to 4, **characterized in that** determining the first area in the candidate area comprises:
determining attribute information of the candidate area;
determining the first area in the candidate area according to the attribute information of the candidate area;
wherein the attribute information of the candidate area comprises one or more of the following information: an area type, an area, a shape, a side length, a position and a boundary probability, wherein the boundary probability characterizes a probability that the candidate area is a boundary of the working area.

6. The method according to any one of claims 2 to 5, **characterized in that** the recognition result comprises an obstacle area;
wherein determining the first area in the candidate area comprises:
determining distribution information of the obstacle area;
determining the first area in the candidate area according to the distribution information of the obstacle area;
wherein the distribution information of the obstacle area comprises one or more of the following information: a position, an area, a shape, a side length and a relative position between the obstacle area and the candidate area.

7. The control method according to claim 6, **characterized in that** determining the first area in the candidate area according to the distribution information of the obstacle area comprises:
determining an area to be screened in the candidate area according to the distribution information of the obstacle area;
determining attribute information of the area to be screened;
determining the first area in the area to be screened according to the attribute information of the area to be screened;
wherein the attribute information of the area to be screened comprises one or more of the following information: an area type, an area, a shape, a side length, a position and a boundary probability, wherein the boundary probability characterizes a probability that the candidate area is a boundary of the working area.

8. The control method according to claim 7, **characterized in that** determining the area to be screened in the candidate area according to the distribution information of the obstacle area comprises:
determining a peripheral polygon area corresponding to the candidate area;
determining an overlapping area between the obstacle area and the peripheral polygon area according to the distribution information of the obstacle area;
determining an area of other regions in the peripheral polygon area, wherein the other regions are regions in the peripheral polygon area except the candidate area;
determining a ratio between the overlapping area and the area of the other regions;
determining the candidate area as the area to be screened when the ratio is less than a first threshold.

9. The control method according to any one of claims 7 to 8, **characterized in that** determining the first area in the area to be screened according to the attribute information of the area to be screened comprises:
determining the area to be screened as the first area when an area type of the area to be screened is stone slab and an area of the area to be screened is less than a second threshold;
or, determining the area to be screened as the first area when the area type of the area to be screened is stone slab and both a length and a width of the area to be screened are less than a distance threshold.

10. The control method according to any one of claims 7 to 8, **characterized in that** determining the first area in the area to be screened according to the attribute information of the area to be screened comprises:
determining the area to be screened as the first area when an area type of the area to be screened is fallen leaves and a ratio between an area of the area to be screened and an image area is less than a third threshold.

11. The control method according to any one of claims 7 to 8, **characterized in that** determining the first area in the area to be screened according to the attribute information of the area to be screened comprises:
determining the area to be screened as the first area when an area type of the area to be screened is soil and an area of the area to be screened is less than a fourth threshold;
or, determining the area to be screened as the first area when the area type of the area to be screened is soil and a shape of the area to be screened is non-strip shaped.

12. The method according to any one of claims 1 to 11, **characterized in that** determining the customized driving information corresponding to each of the non-grass area types according to the target type information comprises:
determining a target area type matching the target type information in the non-grass area types according to the target type information;
determining the customized driving information corresponding to the target area type as the drivable information.

13. The method according to claim 12, **characterized in that** determining the target area type matching the target type information in the non-grass area types according to the target type information comprises:
determining configuration information according to the target type information, wherein the configuration information is configured to characterize whether each of the non-grass area types matches the target type information;
determining the target area type in the non-grass area types based on the configuration information.

14. The method according to any one of claims 1 to 13, **characterized in that** the recognition result further comprises at least one grass area, wherein a grass area type of the grass area corresponds to a recognizable grass type, and the recognizable grass type characterizes a type of grass object that the autonomous mobile device can recognize;
the method further comprises: determining a second area in the at least one grass area;
wherein the target area comprises the first area and the second area, and controlling the autonomous mobile device to drive and/or work in the area to be driven corresponding to the target area comprises: controlling the autonomous mobile device to drive and/or work in the area to be driven corresponding to the first area and the second area.

15. The method according to any one of claims 1 to 14, **characterized in that** controlling the autonomous mobile device to drive and/or work in the area to be driven corresponding to the target area comprises:
determining geometric feature information of the first area;
controlling the autonomous mobile device to drive and/or work in the area to be driven corresponding to the target area based on the geometric feature information of the first area.

16. The method according to claim 15, **characterized in that** the method further comprises:
controlling the autonomous mobile device to perform obstacle avoidance when the geometric feature information of a non-grass area in the target area meets a third preset condition.

17. The method according to claim 16, **characterized in that** the method further comprises:
when the target type information is not determined, obtaining a working area image of the working area (10), and controlling the autonomous mobile device to perform obstacle avoidance when geometric feature information of any non-grass area in the working area image meets a fourth preset condition, wherein the fourth preset condition is different from the third preset condition.

18. The method according to claim 15 or 16, **characterized in that** the method further comprises:
controlling the autonomous mobile device to perform obstacle avoidance when geometric feature information of the target area meets a fifth preset condition, wherein the fifth preset condition comprises that an area of the non-grass areas in the target area is greater than a first area.

19. The method according to claim 18, **characterized in that** the method further comprises:
controlling the autonomous mobile device to perform obstacle avoidance when an area of any non-grass area in a non-target area is greater than a second area, wherein the first area is greater than the second area.

20. The method according to any one of claims 2 to 19, **characterized in that** the method further comprises:
determining a region in the candidate area except the first area as a non-drivable area;
controlling the autonomous mobile device to avoid a spatial area corresponding to the non-drivable area.

21. The method according to any one of claims 1 to 20, **characterized in that** the autonomous mobile system further comprises a control apparatus, wherein the control apparatus is configured to control the autonomous mobile device.

22. A control method, applied to an autonomous mobile system, **characterized in that** the autonomous mobile system comprises an autonomous mobile device configured to drive and/or work in a working area (10), the control method comprising:
obtaining target type information, wherein the target type information characterizes at least one type of non-grass object that the autonomous mobile device can recognize;
obtaining a target image of the working area (10);
determining a first area corresponding to the target type information by performing recognition processing on the target image based on an image recognition model;
determining a target area, wherein the target area comprises the first area;
controlling the autonomous mobile device to drive and/or work in an area to be driven corresponding to the target area.

23. The method according to claim 22, **characterized in that** the first area comprises at least one of a stone slab area, a soil area, a fallen leaves area and a fallen flowers area.

24. The method according to claim 22 or 23, **characterized in that** controlling the autonomous mobile device to drive and/or work in the area to be driven corresponding to the target area comprises:
determining geometric feature information of the target area;
controlling the autonomous mobile device to drive and/or work in the area to be driven corresponding to the target area based on the geometric feature information of the target area.

25. The method according to claim 24, **characterized in that** the geometric feature information comprises one or more of a length, an area, a shape, and an area boundary angle.

26. The method according to any one of claims 24 to 25, **characterized in that** determining the geometric feature information of the target area comprises: determining geometric feature information of the first area;
wherein controlling the autonomous mobile device to drive and/or work in the area to be driven corresponding to the target area based on the geometric feature information of the target area comprises: controlling the autonomous mobile device to drive and/or work in the area to be driven corresponding to the target area based on the geometric feature information of the first area.

27. A control apparatus (90), applied to an autonomous mobile system, **characterized in that** the autonomous mobile system comprises an autonomous mobile device configured to drive and/or work in a working area (10), the apparatus (90) comprising:
a first obtaining module (910), configured to obtain type information of recognizable non-grass objects, wherein the recognizable non-grass objects characterize non-grass objects that the autonomous mobile device can recognize;
a first determining module (920), configured to determine at least one target type information in the type information of the recognizable non-grass objects;
a second obtaining module (930), configured to obtain a target image of the working area (10);
a second determining module (940), configured to determine a recognition result by performing recognition processing on the target image based on an image recognition model, wherein the recognition result comprises at least one non-grass area, and a non-grass area type of the non-grass area corresponds to the type of the recognizable non-grass objects;
a third determining module (950), configured to determine customized driving information corresponding to each of the non-grass area types according to the target type information, wherein the customized driving information includes drivable information or non-drivable information;
a fourth determining module (960), configured to determine a first area in the at least one non-grass area according to the customized driving information corresponding to each of the non-grass area types;
a control module (970), configured to control the autonomous mobile device to drive and/or work in an area to be driven corresponding to a target area, wherein the target area comprises the first area.

28. A computer-readable storage medium, **characterized in that** the storage medium stores a computer program, and the computer program is configured to execute the method according to any one of claims 1 to 26.

29. An electronic device (110), **characterized in that** comprising:
a processor (1101);
a memory (1102) for storing processor-executable instructions;
wherein the processor (1101) is configured to execute the method according to any one of claims 1 to 26.
